# EUROPEAN PATENT SPECIFICATION

(11) **EP 0 885 541 B1**
(45) Date of publication and mention of the grant of the patent: **03.08.2011**
(21) Application number: 97904709.9
(22) Date of filing: 11.02.1997
(51) Int. Cl.: H04W 72/04

(54) **METHOD AND SYSTEM FOR RADIOTRANSPORT OF DATA**
VERFAHREN UND SYSTEM ZUR FUNKÜBERTRAGUNG VON DATEN
PROCEDE ET SYSTEME DE TRANSPORT RADIO DE DONNEES

(30) Priority: 13.03.1996 SE 9600962
(43) Date of publication of application: 23.12.1998
(73) Proprietor: TELIASONERA AB, 123 86 Farsta (SE)
(72) Inventor: LARSSON, Roger, S-976 32 Lule (SE); ÖSTBERG, Christer, S-245 44 Staffanstrop (SE); WAHLQVIST, Mattias, S-973 32 Lule (SE)
(74) Representative: Aurell, Henrik
(86) International application number: PCT/SE1997/000203
(87) International publication number: WO 1997/034436

(56) References cited:
- EP-A- 0 681 406

## Description

The present invention relates to a radio communications system, transmitters and receivers therefor and, in particular, the air interface for third generation radio systems such as those used for digital mobile cellular radio telephony.

In second generation radio air interfaces, the object was to design an interface which would support speech transport, together with some data, at a fixed quality of service, over a radio channel, with minimum use of radio resources. By way of contrast, the goal for third generation radio air interfaces is to facilitate the transport of any type of information at a predetermined quality of service over a radio channel with a minimum use of radio resources. Thus, third generation radio air interfaces require a much higher degree of flexibility and adaptability than second generation air interfaces. The present invention proposes a radio system which meets the demand of third generation radio interfaces for greater flexibility and adaptability, by subdividing the radio interface, and its associated functions, into smaller units. Each of these smaller units has a well defined interface with other interface units.

It should be noted that the objectives to be met by third generation air interfaces are not dissimilar to the objectives which are met by ATM, see our SE patent number 515 010. However, while the analogies that can be drawn between third generation radio air interfaces are of considerable value, it should not be forgotten that ATM is employed with systems which from a radio perspective, have unlimited capacity and extremely high quality of service.

Third generation radio air interfaces will find application with, among other things, digital radio telephony, for example, the DECT system for digital cordless telephony and the GSM system for digital cellular mobile telephony. In such systems, radio communications channels must be established between mobile transceivers and base station transceivers. The present invention is concerned primarily with the transport and control functions of the physical layer and the functions for interleaving and error correction.

The operation of air interfaces used with DECT and GSM systems has been extensively described in prior art literature. In particular, the use of ATM in connection with such systems is also known. However, the present invention is based on a novel approach to the construction/design of third generation radio air interfaces.

US patent 5,406,550 describes a communications system for data transmission from an ATM network to a mobile radio sys tem. The inter face be tween the two systems is arranged to remove the header of each, ATM cell entering the radio system from the VPI and VCI. The object of the invention is to reduce transmission overheads.

US patent 5,359,603 describes an ATM system adapted for use with a mobile telecommunications system. The invention is designed to overcome handover problems between base stations associated with slow switching speeds in the fixed network. This invention provides for the establishment of permanent virtual paths across the ATM network which links base stations.

US patent 5,398,347 describes a logical sub-channel scheme which is suitable for use with GSM mobile systems.

US patent 5,434,859 relates to radio resource management on an FDM mobile radio system which gives access to ATM based services to a subscriber.

The international application with publication number WO 93/19559 relates to the interface between ATM over the fixed network and ATM, using half cells, over a mobile network.

According to a first aspect of the present invention, there is provided a radio communications system employing a plurality of logical communication channels having radio resource means for allocating radio resources, transport control means for configuring said plurality of logical transport channels, characterised in that radio transport is effected by a plurality of function units, each of which has a function unit specification list associated therewith, in that said function unit specification lists each include at least two function specifications defining input formats, output formats and signalling, for each function unit, and in that said transport control means is adapted to select a function specification for each function unit from the function unit specification list associated with each function unit.

Operation of said function units may be controlled by parameters transmitted between a transmitter and a receiver.

Control data may be adapted to be transmitted between a transmitter and a receiver via a physical control channel distinct from said logical communications channels, and said physical control channel may be arranged to be synchronised with said logical communications channels.

Said physical control channel may be arranged to carry signals indicative of changes in said parameters.

A transport channel, having a plurality of logical channels associated therewith, may have a separate transport control means, which among other things, may be arranged to set signalling formats to be used between a transmitter and a receiver, and said radio resource means may be common to all transport channels.

Said radio communications system may include a plurality of fixed base stations and a plurality of mobile stations, and said radio communications system may be adapted to handle three distinct groups of transport channels, namely:
- minimum group comprising transport channels supported by all base stations in said radio communications system;
- a standardised group comprising transport channels the specifications of which are built into some of said base stations; and
- an open group comprising transport specified during system operation channels.

Said radio communications system may transceivers having means for downloading modules required to support a transport channel within said open group of transport channels.

Said radio communications system may be a digital cellular mobile radio telephony system.

Said radio sys tem may be a GSM digital cellular mobile radio telephony system.

Alternatively, said radio system may be a DECT mobile radio telephony system.

According to a second aspect of the present invention, there is provided a base station and a number of different types of transport channels characterised in that said base station forms part of a radio communications system as defined above.

According to a third aspect of the present invention, there is provided a mobile transceiver and a number of different types of transport channels characterised in that said mobile transceiver is adapted to operate within a radio communications system as defined above.

According to a fourth aspect of the present invention, there is provided, in a method of controlling radio communication between two transceivers in a radio communication system employing a plurality of logical communication channels having radio resource means for allocating radio resources, transport control means for configuring said plurality of logical transport channels characterised by:
- effecting radio transport of data by means of a plurality of function units each of which can operate in at least two different modes, each mode defined by a function specification; and
- selecting, for each function unit, a mode of operation, by means of a handshake procedure conducted between said two transceivers.

Said function units may include multiplexing, coding and/or interleaving, modulation, multiple access, and radio transmission.

Preferably, said function units have well defined interfaces with each other.

Preferably, each function specification defines four interfaces, namely:
- input transport, defining a data format for data to be transmitted to an input to a function unit;
- output transport, defining a data format for data to be transmitted from an output of a function unit;
- input control, defining a format for control signalling required by a function unit; and
- output control, defining a format for signalling produced by a function unit.

Said method may include:
- passing parameters between said two transceivers; and
- controlling operation of said function units in dependence on the value of said parameters.

One of said parameters may be a measure of quality of reception at a receiving transceiver.

Each function unit may have associated therewith a function unit specification list defining the function specifications for the different modes of operation which that function unit can perform.

Said method may include selecting, on setting up a radio communication link. a function specification, together with a set of initial parameters, for each function unit.

Said method may include:
- transmitting control data between two transceivers via a physical control channel distinct from logical communications channels used for transmission of subscriber data; and
- synchronising said physical control channel with said logical communications channels.

Said logical communications channels may fall into one of three distinct groups of transport channels, namely:
- a minimum group comprising transport channels supported by all transceivers in said radio communications system;
- a standardised group comprising transport channels the specification of which are built into some of said transceivers: and
- an open group comprising transport channels specified during system operation.

A transceiver, as part of a communications link set up procedure, may download software modules required to support a transport channel falling within said open group of transport channels.

Embodiments of the invention will now be described, by way of example, with reference to the accompanying drawings, in which:
Figure 1 illustrates, in schematic form, the relationship between a transport channel and logical channels;
Figure 2 illustrates the operation of radio resource control and transport control on the radio transport service provided by a radio communications system according to the present invention;
Figure 3 illustrates the grouping of transport channels in the present invention;
Figure 4 is flow diagram of the process used to set up a transport channel;
Figure 5 is a representation of the transport chain used in the present invention;
Figure 6 illustrates the selection of a functional specification and the interfaces between functional units established thereby;
Figure 7 illustrates the operation of control functions on transport channels.

To facilitate an understanding of the present invention a glossary of the abbreviations used in the specification is set out below:
ACA: Access Channel Allocation
ATM: Asynchronous Transfer Mode
BS: Base Station
ATM: Asynchronous Transfer Mode
FH: Frequency Hopping
FS: Function Specification
FU: Function Unit
FUSL: Function Unit Specification List
IC: Input Control
IT: Input Transport
MS: Mobile Station
OC: Output Control
OFDM: Orthogonal Frequency Division Multiplex
OT: Output Transport
QoS: Quality of Service
RTF: Radio Transport function
VC: Virtual Channel
VCI: Virtual Channel Identifier
VP: Virtual Path
VPI: Virtual Path Identifier

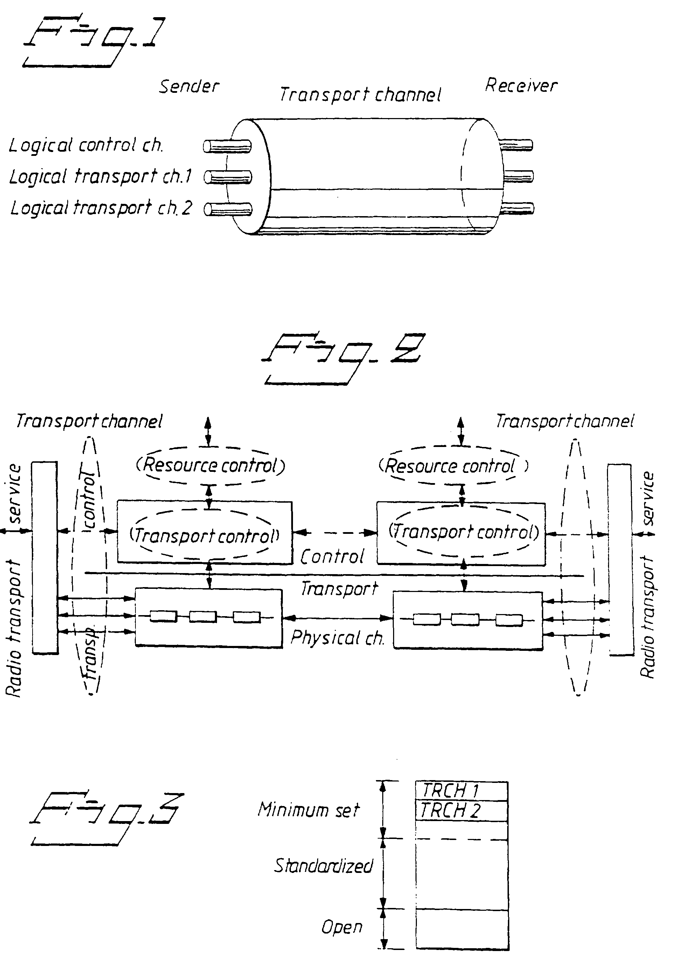

Data is transmitted, in a radio transmission system, from a sender to a receiver by means of a radio transport service. The radio transport service can be regarded as part of a radio transport function which includes functions for the allocation of radio resources and functions for handling routing etc.. The attributes of a radio transport service are used, in conjunction with the resource allocation function, to select a transport channel. A transport channel can consist of one, or many, logical channels, see Figure 1. which schematically represents a single transport channel having two logical channels for the transmission of subscriber data and a logical control channel for system signalling and transmission of system data. A transport channel is treated as a single connection when it comes to handover, and similar functions, related to the mobiles radio telephony environment. The use of transport channels can be compared to VC and VP in ATM.

There is a clear distinction between the way logical channels used for control and logical channels used for transport of subscriber information are handled. As can be clearly seen from Figure 2, the logical channels used for transport of subscriber data are input into the radio transport chain, whereas the logical 1 channels used for control are passed to the transport control functions. The transport control 1 function configures the logical transport channel by selection of function specifications and parameter settings for each function unit, see below. Information on the selected function specifications and associated parameter settings is passed to a receiver by means of a physical control channel. The physical control channel must be synchronised with the logical transport channels with which it is associated. This is a necessary requirement because the physical control channel is used for transmission of data relating to changes in parameter settings applicable to an active transport channel.

The control functions, see Figure 2, can be divided into two groups, the transport control sub-system and resource control sub-system. Each transport channel has a transport control sub-system that defines how signalling between sender and receiver should be performed. There is a resource control sub-system which is common to all transport channels in the system and which allocates radio resources. Typical resource control 1 functions are: ACA, frequency hoping, power control and subcarrier allocation.

A transport channel can operate in three distinct modes, namely: set up, active, and release. In the set up mode a function specification is selected for each unit in the transport chain. The selection is achieved by using the set up channel, together with a preset protocol for this channel. During the active mode, subscriber data is transmitted over the transport chain. The control functions must, while the system is in the active mode, maintain quality of service and support variations in the radio transport service, using the minimum of radio resources. This is achieved by changing the parameters associated with each function specification. A transport channel is released when it is disconnected, or handed over to another base station.

It is possible to have a number of different types of transport channel, as illustrated schematically in Figure 3. In particular, transport channels can be classified into three sets, namely: minimum, standardised and open. The minimum set of transport channels are those transport channels which are supported by all base stations and mobiles in the system. The standardised set are those transport channels, not falling in the set of minimum transport channels, that are available when the system was first commissioned. In other words, some, but not all mobiles and base stations will be able to support transport, channels in the standardised set. The last set of transport channels, the open set, are transport channels which can be used to expand the capabilities of the system after it has been commissioned.

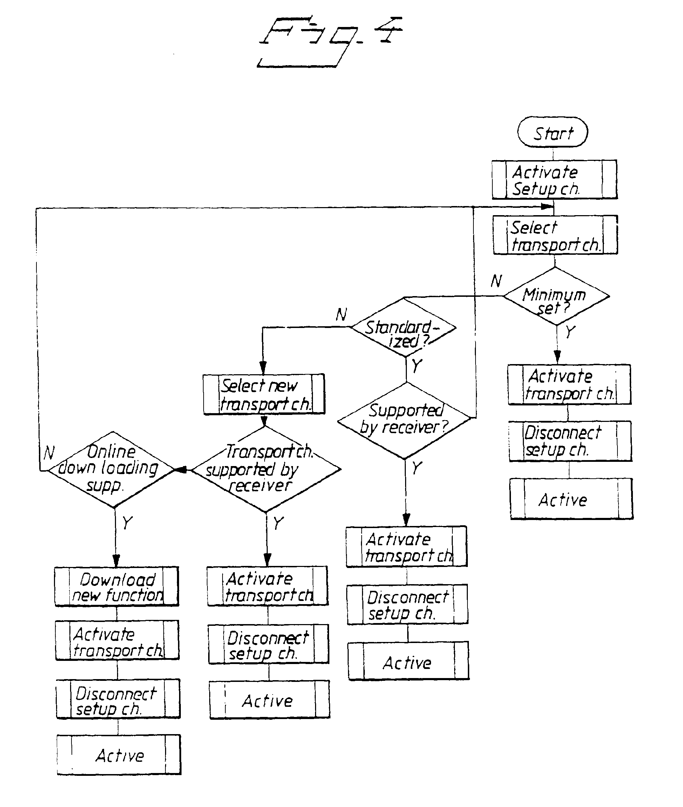

Figure 4 is a flow diagram illustrating the method by which a transport channel is set up. Initially, the set up channel is activated. The set up channel is then used for signalling between the transmitter and receiver. The signalling procedures vary, depending on the set (minimum, standard, or open) to which the radio transport channel belongs. To set up a transport channel belonging to the minimum set, a minimum of signalling is required, because, all 3S/MS in the system support this set of transport channels. For transport channels belonging to the standardised set, the function specification to be used by each of the function units is selected and the initial parameter settings determined. With transport channels belonging to the open set, there are two possibilities, either the terminal already supports the transport channel, or the terminal is an advanced multimode terminal that can download software to support the selected transport channel.

After the set up phase, the transport channel is in active mode. In the active mode, the object is to maintain quality of service and to adapt the transport channel to changes in the attributes, or environment, of the radio service. This is achieved by passing parameters, supported by the function specifications. between the sender and receiver. Typical 1 parameters transmitted by the receiver are various quality of service measurements, e.g. received power, error rate, etc.. These parameters are analysed at the transmitter and the results used to update parameter settings in the functional specifications of the function units in both transmitter and receiver.

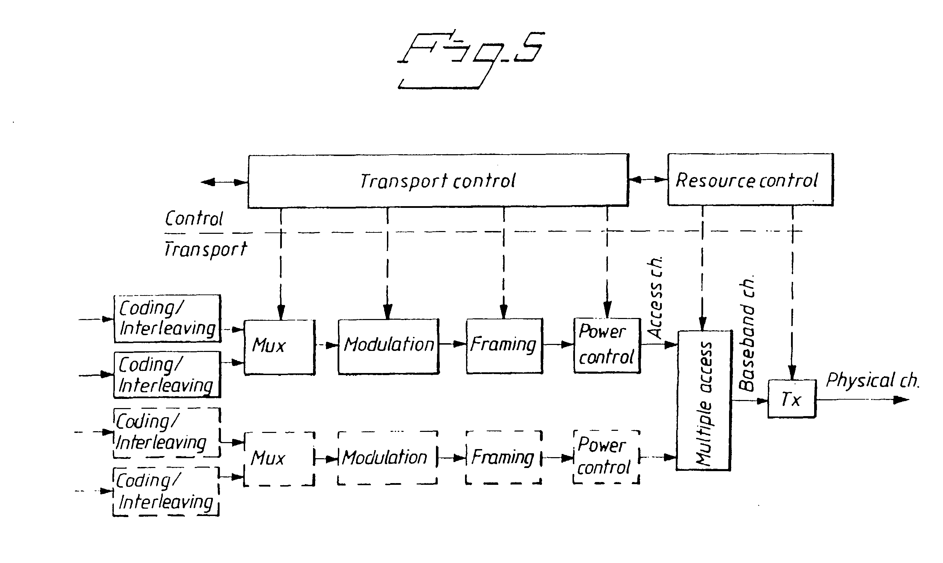

Subscriber data is transmitted over the transport channels. A transport channel can be regarded as a specific selection of function specifications in the transport chain. Operation of the transport control sub-system is schematically illustrated in Figure 5. It will be noted that the transport control sub-system is divided into a number of function units. Typical function units are multiplexing, coding/interleaving, modulation, multiple access and transmitter operation. Each function unit has an associated function unit specification list which defines the set of possible function specifications for the function unit. Each function specification is a detailed description of the input format and output format of the transport and control information. In other words, a function specification defines a possible mode of operation for a function unit in terms of inputs and outputs. There are two sections in a function specification list, a section that deals with standardised functions and a section that deals with the open set of transport channels.

When a function unit is set up, a function specification, available on the function specification list for that function unit, is selected. This function specification will then defines the interfaces and functions of the function unit. A function specification defines four interfaces:
- input transport;
- output transport;
- input control ; and
- output control.

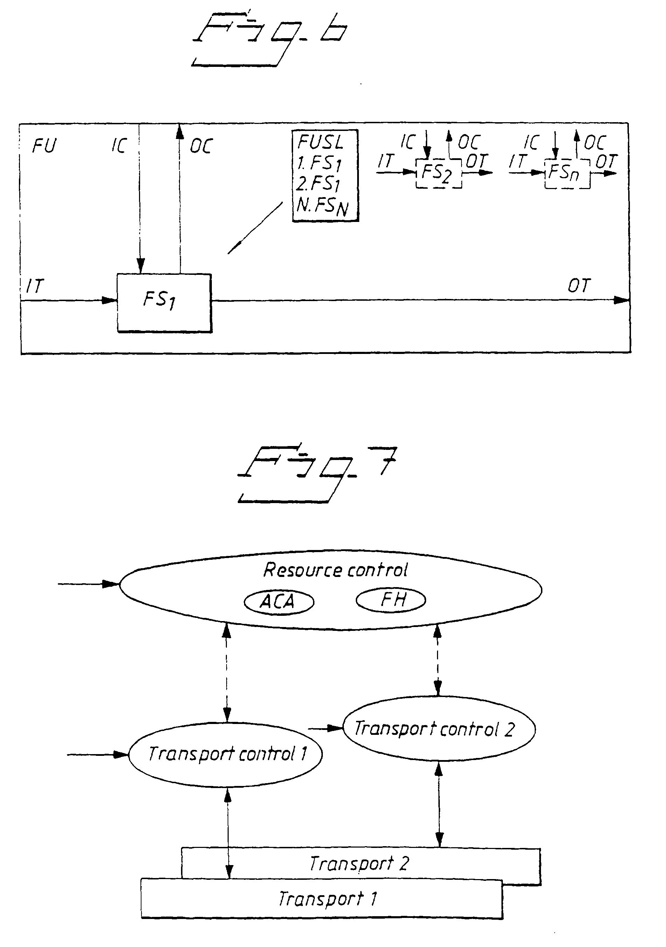

This process is illustrated in Figure 6, which shows the relationship between a function unit, its function specification list and function specifications. Figure 6 shows that FS₁ has been selected and that the inputs and outputs of the function unit are now dictated by FS₁. Thus, it will be seen that a transport channel 1 can be regarded as the combination of the function specifications for each of the function units in the radio transport chain. When the transport channel is in the active phase, the input control and output control interfaces are used to change parameters in the function specification, i.e. to modify operation of the radio transport chain to meet current radio environment constraints and attributes.

By using function units, the physical layer is divided into smaller units with well defined interfaces between units. Smaller units are needed to meet the requirement, with third generation radio air interfaces, for flexibility and adaptability in the physical layer.

The control function can be divided into the transport control function and the resource control function. The transport control function is unique for each transport channel type. The resource control function contains functions that allocate radio resources for all transport channels. Typical examples of functions controlled by the resource control are ACA, FH and subcarrier allocation. The relationship between resource control functions, transport control functions and transport channels is illustrated schematically in Figure 7. Information transmitted to the transport control function is conveyed over a logical channel. A typical example of a logical channel used for control, is the associated control channel. The resource control has an interface towards the resource control functions in higher layers. The resource control uses functions in the transport control domain to send information between the sender and receiver. The protocol used for transmission of control information on the associated control channel depends on the importance of the control information to be transmitted over that channel.

Referring again to Figure 5, information transported by the transport chain has to be in the format specified for the transport channel. The input format depends on which function specification has been selected. For example, the multiplexing unit combines information from different logical channels. The way in which the multiplexing operation is performed depends on the type of transport channel used, since the requirements for different transport channels differ. The multiplexed data is mapped onto transmission symbols by the modulation unit. The framing unit combines the transport information with the control information used to configure the radio transport chain. The power control unit sets the power on each of the access channels. The multiple access unit combines different access channels and converts them into a baseband channel. Finally the base band channel is transmitted on a physical channel.

## Claims

1. A radio communications system employing a plurality of logical communication channels having radio resource means for allocating radio resources, transport control means for configuring said plurality of logical transport channels, **characterised in that** radio transport is effected by a plurality of function units, each of which has a function unit specification list associated therewith, **in that** said function unit specification lists each include at least two function specifications defining input formats, output formats and signalling, for each function unit and **in that** said transport control means is adapted to select a function specification for each function unit from the function unit specification list associated with each function unit.

2. A radio communications system as claimed in claim 1, **characterised in that** said function units include multiplexing, coding and/or interleaving, modulation multiple access, and radio transmission.

3. A radio communications system as claimed in either claim 1, or 2, **characterised in that** said function units have well defined interfaces with each other.

4. A radio communications system as claimed in claim 3, **characterised in that** each function specification defines four interfaces, namely:
- input transport, defining a data format for data at an input to a function unit;
- output transport defining a data format for data at an output of a function unit;
- input control, defining a format for control Signalling required by a function unit; and
- output control defining a format for signalling produced by a function unit.

5. A radio communications system as claimed in any previous claim **characterised in that** operation of said function units is controlled by parameters transmitted between a transmitter and a receiver.

6. A radio communications system as claimed in any previous claim **characterised in that** control data is adapted to be transmitted between a transmitter and a receiver via a physical control channel distinct from said logical communications channels, and **in that** said physical control channel is arranged to be synchronised with said logical communications channels.

7. A radio communications system as claimed in claim 6, **characterised in that** said physical control channel is arranged to carry signals indicative of changes in said parameters.

8. A radio communications system as claimed in any previous claim **characterised in that** a transport channel, having a plurality of logical channels associated therewith, has a separate transport control means, which among other things, is arranged to set signalling formats to be used between a transmitter and a receiver, and **in that** said radio resource means is common to all transport channels.

9. A radio communications system as claimed in claim 8, **characterised in that** said radio communications system includes a plurality of fixed base stations and a plurality of mobile stations, and **in that** said radio communications system is adapted to handle distinct groups of transport channels, namely:
- minimum group comprising transport channels supported by all base stations in said radio communications system;
- a standardised group comprising transport channels the specifications of which are built into some of said base stations; and
- an open group comprising transport channels specified during system operation.

10. A radio communication system as claimed in claim 9, **characterised in that** said radio communication system includes transceivers having means for downloading software modules required to support a transport channel falling within said open group of transport channels.

11. A radio communication system as claimed in any previous claim **characterised in that** said radio communications system is a digital cellular mobile radio telephony system.

12. A radio communications system as claimed in claim 11, **characterised in that** said radio system is a GSM digital cellular mobile radio telephony system.

13. A radio communications system as claimed in any of claims 1 to 10, **characterised in that** said radio system is a DECT mobile radio telephony system.

14. A base station and a number of different types of transport channels **characterised in that** said base station forms part of a radio communication system as claimed in any of claims 11 to 13 wherein said base station is arranged to support said number of different types of transport channels.

15. A mobile transceiver and a number of different types of transport channels **characterised in that** said mobile transceiver is adapted to operate within a radio communications system as claimed in any of claims 11 to 13 wherein said mobile transceiver is arranged to support said number of different types of transport channels.

16. A method of controlling radio communication between two transceivers in a radio communication system employing a plurality of logical communication channels having radio resource means for allocating radio resources, transport control means for configuring said plurality of logical transport channels, **characterised in that**:
- effecting radio transport of data by means of a plurality of function units each of which can operate in at least two different modes, each mode defined by a function specification; and
- selecting, for each function unit, a mode of operation, by means of a handshake procedure conducted between said two transceivers.

17. A method as claimed in claim 16, **characterised in that** said function units include multiplexing, coding and/or interleaving, modulation multiple access and radio transmission.

18. A method as claimed in either claim 16, or 17, **characterised in that** said function units have well defined interfaces with each other.

19. A method as claimed in claim 18, **characterised in that** each function specification defines four interfaces, namely:
- input transport, defining a data format for data to be transmitted to an input to a function unit;
- output transport, defining a data format for data to be transmitted from an output of a function unit;
- input control, defining a format for control signalling required by a function unit; and
- output control, defining a format for signalling produced by a function unit.

20. A method as claimed in any of claims 16 to 19, **characterised by**:
- passing parameters between said two transceivers; and
- controlling operation of said function units in dependence on the value of said parameters.

21. A method as claimed in claim 20, **characterised in that** one of said parameters is a measure of quality of reception at a receiving transceiver.

22. A method as claimed in either claim 20, or 21, **characterised in that** each function unit has associated therewith a function unit specification list defining the function specifications for the different modes of operation which that function unit can perform.

23. A method as claimed in claim 22, **characterised by** selecting, on setting up a radio communication link, a function specification, together with a set of initial parameters, for each function unit.

24. A method as claimed in any of claims 16 to 23, **characterised by**:
- transmitting control data between two transceivers via a physical control channel distinct from logical communications channels used for transmission of subscriber data; and
- synchronizing said physical control channel with said logical communications channels.

25. A method as claimed in claim 24, **characterised in that** said logical communications channels fall into one of three distinct groups of transport channels, namely:
- a minimum group comprising transport channels supported by all transceivers in said radio communications system;
- a standardised group comprising transport channels the specification of which are built into some of said transceivers; and
- an open group comprising transport channels specified during system operation.

26. A method as claimed in claim 25, **characterised by** a transceiver, as part of a communications link set up procedure, downloading software modules required to support a transport channel falling within said open group of transport channels.

27. A method as claimed in any of claims 16 to 26, **characterised in that** said radio communications system is a digital cellular mobile radio telephony system.

28. A method as claimed in claim 27, **characterised in that** said radio system is a GSM digital cellular mobile radio telephony system.

29. A method as claimed in any of claims 16 to 26. **characterised in that** said radio system is a DECT mobile radio telephony system.

## Patentansprüche

1. Funkkommunikationssystem, das eine Anzahl von logischen Kommunikationskanälen mit Funkressourcenmitteln zum Zuweisen von Funkressourcen einsetzt, Übertragungssteuermittel zum Konfigurieren der Anzahl von logischen Übertragungskanälen, **dadurch gekennzeichnet, dass** die Funkübertragung durch eine Anzahl von Funktionseinheiten durchgeführt wird, von denen jede eine Funktionseinheitspezifikationsliste, die ihr zugewiesen ist, aufweist, dass die Funktionseinheitspezifikationsliste jeweils zumindest zwei Funkspezifikationsdefinitionseingangsformate aufweist, Ausgangsformate und eine Signalisierung für jede Funktionseinheit und dass das Übertragungssteuermittel ausgebildet ist, um eine Funktionsspezifikation für jede Funktionseinheit aus der Funktionseinheitsspezifikationsliste, die jeder Funktionseinheit zugeordnet ist, auszuwählen.

2. Funkkommunikationssystem nach Anspruch 1, **dadurch gekennzeichnet, dass** die Funktionseinheiten Multiplexen, Kodieren und/oder Verschachteln, mehrfach Modulationszugriff und Funkübermittlung umfassen.

3. Funkkommunikationssystem nach Anspruch 1 oder 2, **dadurch gekennzeichnet, dass** die Funktionseinheiten wohldefinierte Schnittstellen miteinander aufweisen.

4. Funkkommunikationssystem nach Anspruch 3, **dadurch gekennzeichnet, dass** jede Funkspezifikation vier Schnittstellen definiert, nämlich:
- Eingangsübertragung, die ein Datenformat für Daten an einem Eingang für eine Funktionseinheit definiert,
- Ausgangsübertragung, die ein Datenformat für Daten an einem Ausgang einer Funktionseinheit definiert,
- Eingangssteuerung, die ein Format zum Steuern von Signalisierung definiert, die durch eine Funktionseinheit benötigt wird, und
- Ausgangssteuerung, die ein Format zum Signalisieren definiert, das durch eine Funktionseinheit erzeugt wird.

5. Funkkommunikationssystem nach einem der vorstehenden Ansprüche, **dadurch gekennzeichnet, dass** der Betrieb der Funktionseinheiten durch Parameter gesteuert wird, die zwischen einem Transmitter und einem Empfänger übermittelt werden.

6. Funkkommunikationssystem nach einem der vorstehenden Ansprüche, **dadurch gekennzeichnet , dass** Steuerdaten ausgebildet sind, um zwischen einem Transmitter und einem Empfänger über einen physikalischen Steuerkanal übertragen zu werden, der von den logischen Kommunikationskanälen unterschieden ist, und dass der physikalische Steuerkanal ausgebildet ist, um mit den logischen Kommunikationskanälen synchronisiert zu sein.

7. Funkkommunikationssystem nach Anspruch 6, **dadurch gekennzeichnet, dass** der physikalische Steuerkanal ausgebildet ist, um Signale zu tragen, die Änderungen in den Parametern anzeigen.

8. Funkkommunikationssystem nach einem der vorstehenden Ansprüche, **dadurch gekennzeichnet, dass** ein Übertragungskanal mit einer Anzahl von logischen Kanälen, die ihm zugeordnet sind, eine separate Übertragungssteuereinrichtung aufweist, die unter anderem ausgebildet ist, um Signalisierungsformate einzustellen, die zwischen einem Transmitter und einem Empfänger zu verwenden sind, und dass das Funkressourcenmittel gemeinsam für alle Übertragungskanäle ist.

9. Funkkommunikationssystem nach Anspruch 8, **dadurch gekennzeichnet, dass** das Funkkommunikationssystem eine Anzahl von festen Basisstationen und eine Anzahl von Mobilstationen aufweist und dass das Funkkommunikationssystem ausgebildet ist, unterschiedliche Gruppen von Übertragungskanälen zu bedienen, nämlich:
- eine Minimalgruppe, die Übertragungskanäle aufweist, die von allen Basisstationen in dem Funkkommunikationssystem unterstützt werden,
- eine standardisierte Gruppe mit Übertragungskanälen, deren Spezifikationen in einige der Basisstationen eingebaut sind, und
- eine offene Gruppe mit Übertragungskanälen, die während des Systembetriebs spezifiziert werden.

10. Funkkommunikationssystem nach Anspruch 9, **dadurch gekennzeichnet, dass** das Funkkommunikationssystem Transceiver aufweist mit Mitteln zum Herunterladen von Softwaremodulen, die zum Unterstützen eines Übertragungskanals benötigt werden, der in die offene Gruppe von Übertragungskanälen fällt.

11. Funkkommunikationssystem nach einem der vorstehenden Ansprüche, **dadurch gekennzeichnet , dass** das Funkkommunikationssystem ein digitales zellulares mobiles Funktelefonsystem ist.

12. Funkkommunikationssystem nach Anspruch 11, **dadurch gekennzeichnet, dass** das Funksystem ein digitales zelluläres mobiles GSM-Funktelefonsystem ist.

13. Funkkommunikationssystem nach einem der Ansprüche 1 bis 10, **dadurch gekennzeichnet, dass** das Funksystem ein mobiles DECT-Funktelefonsystem ist.

14. Basisstation und eine Anzahl von unterschiedlichen Arten von Übertragungskanälen, **dadurch gekennzeichnet, dass** die Basisstation einen Teil eines Funkkommunikationssystems nach einem der Ansprüche 11 bis 13 bildet, wobei die Basisstation ausgebildet ist, die Anzahl von unterschiedlichen Arten von Übertragungskanälen zu unterstützen.

15. Mobiler Transceiver und eine Anzahl von unterschiedlichen Arten von Übertragungskanälen, **dadurch gekennzeichnet, dass** der mobile Transceiver ausgebildet ist, innerhalb eines Funkkommunikationssystems nach einem der Ansprüche 11 bis 13 zu arbeiten, wobei der mobile Transceiver ausgebildet ist, die Anzahl von unterschiedlichen Arten von Übertragungskanälen zu unterstützen.

16. Verfahren zum Steuern von Funkkommunikation zwischen zwei Transceivern in einem Funkkommunikationssystem, das eine Anzahl von logischen Kommunikationskanälen mit Funkressourcemitteln zum Zuweisen von Funkressourcen einsetzt, Übertragungssteuermittel zum Konfigurieren der Anzahl von logischen Übertragungskanälen, **gekennzeichnet durch**:
- Durchführung von Funkübertragung von Daten mittels einer Anzahl von Funktionseinheiten, von denen jede in zumindest zwei unterschiedlichen Modi arbeiten kann, wobei jeder Modus **durch** eine Funktionsspezifikation definiert ist, und
- für jede Funkeinheit das Auswählen eines Betriebsmodus mittels einer Übergabeprozedur, die zwischen den beiden Transceivern durchgeführt wird.

17. Verfahren nach Anspruch 16, **dadurch gekennzeichnet, dass** die Funktionseinheiten Multiplexen, Kodieren und/oder Verschachteln, mehrfach Modulationszugriff und Funkübermittlung umfassen.

18. Verfahren nach Anspruch 16 oder 17, **dadurch gekennzeichnet, dass** die Funktionseinheiten wohldefinierte Schnittstellen miteinander aufweisen.

19. Verfahren nach Anspruch 18, **dadurch gekennzeichnet, dass** jede Funktionsspezifikation vier Schnittstellen definiert, nämlich:
- Eingangsübertragung, die ein Datenformat für Daten definiert, die an einen Eingang einer Funktionseinheit zu übermitteln sind,
- Ausgangsübertragung, die ein Datenformat für Daten definiert, die von einem Ausgang einer Funktionseinheit zu übermitteln sind,
- Eingangssteuerung, die ein Format zum Steuern von Signalisierung definiert, das durch eine Funktionseinheit benötigt wird, und
- Ausgangssteuerung, die ein Format zum Signalisieren definiert, das durch eine Funktionseinheit erzeugt wird.

20. Verfahren nach einem der Ansprüche 16 bis 19, **gekennzeichnet durch**:
- Passierenlassen von Parametern zwischen den beiden Transceivern und
- Steuerung des Betriebs der Funktionseinheiten in Abhängigkeit von den Werten der Parameter.

21. Verfahren nach Anspruch 20, **dadurch gekennzeichnet , dass** einer der Parameter ein Maß für die Empfangsqualität in einem empfangenden Transceiver ist.

22. Verfahren nach Anspruch 20 oder 21, **dadurch gekennzeichnet, dass** jeder Funktionseinheit eine Funktionseinheitenspezifikationsliste zugeordnet ist, die die Funktionsspezifikationen für die unterschiedlichen Betriebsmodi definiert, die die Funktionseinheit durchführen kann.

23. Verfahren nach Anspruch 22, **gekennzeichnet durch** das Auswählen einer Funktionsspezifikation zusammen mit einem Satz von Anfangsparametern für jede Funktionseinheit, beim Aufbau einer Funkkommunikationsverbindung.

24. Verfahren nach einem der Ansprüche 16 bis 23, **gekennzeichnet durch**:
- Übertragen von Steuerdaten zwischen zwei Transceivern über einen physikalischen Steuerkanal, der sich von logischen Kommunikationskanälen unterscheidet, die zum Übermitteln von Teilnehmerdaten verwendet werden, und
- Synchronisieren des physikalischen Steuerkanal mit den logischen Kommunikationskanälen.

25. Verfahren nach Anspruch 24, **dadurch gekennzeichnet, dass** die logischen Kommunikationskanäle in eine von drei unterschiedlichen Gruppen von Übertragungskanälen fallen, nämlich:
- einer Minimalgruppe, die Übertragungskanäle aufweist, die durch alle Transceiver in dem Funkkommunikationssystem unterstützt werden,
- einer standardisierten Gruppe, die Übertragungskanäle aufweist, deren Spezifikation in einige der Transceiver eingebaut sind, und
- eine offene Gruppe mit Übertragungskanälen, die während des Systembetriebs spezifiziert werden.

26. Verfahren nach Anspruch 25, **gekennzeichnet durch** einen Transceiver als Teil einer Kommunikationsverbindungsaufbauprozedur, der Softwaremodule herunterlädt, die zum Unterstützen eines Übertragungskanals benötigt werden, der in die offene Gruppe von Übertragungskanälen fällt.

27. Verfahren nach einem der Ansprüche 16 bis 26, **dadurch gekennzeichnet, dass** das Funkkommunikationssystem ein digitales zelluläres mobiles Funktelefonsystem ist.

28. Verfahren nach Anspruch 27, **dadurch gekennzeichnet, dass** das Funksystem ein digitales zelluläres mobiles GSM-Funktelefonsystem ist.

29. Verfahren nach einem der Ansprüche 16 bis 26, **dadurch gekennzeichnet, dass** das Funksystem ein mobiles DECT-Funktelefonsystem ist.

## Revendications

1. Système de communication radio utilisant une pluralité de canaux de communication logiques comportant un moyen de commande de ressource radio destiné à attribuer des ressources radio, un moyen de commande de transport destiné à configurer ladite pluralité de canaux de transport logiques, **caractérisé en ce que** le transport radio est réalisé par une pluralité d'unités fonctionnelles, chacune d'elles étant associée à une liste de spécifications d'unité fonctionnelle, **en ce que** lesdites listes de spécification d'unité fonctionnelle comportent chacune au moins deux spécifications fonctionnelles définissant des formats d'entrée, des formats de sortie et de signalisation, pour chaque unité fonctionnelle et **en ce que** ledit moyen de commande de transport est adapté afin de sélectionner une spécification fonctionnelle pour chaque unité fonctionnelle à partir de la liste de spécifications d'unité fonctionnelle associée à chaque unité fonctionnelle.

2. Système de communication radio selon la revendication 1, **caractérisé en ce que** lesdites unités fonctionnelles comportent le multiplexage, le codage et/ou l'imbrication, la modulation à accès multiple et la transmission radio.

3. Système de communication radio selon la revendication 1 ou 2, **caractérisé en ce que** lesdites unités fonctionnelles présentent des interfaces bien définies l'une par rapport à l'autre.

4. Système de communication radio selon la revendication 3, **caractérisé en ce que** chaque spécification fonctionnelle définit quatre interfaces, à savoir :
de transport d'entrée, définissant un format de données pour des données au niveau d'une entrée vers une unité fonctionnelle ;
de transport de sortie définissant un format de données pour des données au niveau d'une sortie d'une unité fonctionnelle ;
de commande d'entrée, définissant un format pour la signalisation de commande requise par une unité fonctionnelle ;et
de commande de sortie définissant un format pour la signalisation produite par une unité fonctionnelle.

5. Système de communication radio selon l'une quelconque des revendications précédentes, **caractérisé en ce que** le fonctionnement desdites unités fonctionnelles est commandé par des paramètres transmis entre un émetteur et un récepteur.

6. Système de communication radio selon l'une quelconque des revendications précédentes, **caractérisé en ce que** les données de commande sont adaptées de manière à être transmises entre un émetteur et un récepteur par l'intermédiaire d'un canal de commande physique distinct par rapport auxdits canaux de communication logiques, et **en ce que** ledit canal de commande physique est agencé de manière à être synchronisé avec lesdits canaux de communication logiques.

7. Système de communication radio selon la revendication 6, **caractérisé en ce que** ledit canal de commande physique est agencé afin de supporter des signaux représentatifs de modifications sur lesdits paramètres.

8. Système de communication radio selon l'une quelconque des revendications précédentes, **caractérisé en ce qu'**un canal de transport, associé à une pluralité de canaux logiques comporte un moyen de commande de transport distinct, qui, entre autre chose, est agencé afin de définir des formats de signalisation à utiliser entre un émetteur et un récepteur, et **en ce que** ledit moyen de commande de ressource radio est commun à tous les canaux de transport.

9. Système de communication radio selon la revendication 8, **caractérisé en ce que** ledit système de communication radio comporte une pluralité de stations de base fixes et une pluralité de stations mobiles, et **en ce que** ledit système de communication radio est adapté de manière à prendre en charge des groupes distincts de canaux de transport, à savoir :
un groupe minimum comprenant des canaux de transport supportés par toutes les stations de base dans ledit système de communications radio ;
un groupe standardisé comprenant des canaux de transport dont les spécifications sont intégrées dans certaines desdites stations de base ; et
un groupe ouvert comprenant des canaux de transport spécifiés au cours du fonctionnement de système.

10. Système de communication radio selon la revendication 9, **caractérisé en ce que** ledit système de communication radio comporte des émetteurs-récepteurs comportant des moyens destinés à télécharger des modules logiciels requis afin de supporter un canal de transport appartenant audit groupe de canaux de transport ouvert.

11. Système de communication radio selon l'une quelconque des revendications précédentes, **caractérisé en ce que** ledit système de communication radio est un système de téléphonie radio mobile cellulaire numérique.

12. Système de communication radio selon la revendication 11, **caractérisé en ce que** ledit système radio est un système de téléphonie radio mobile cellulaire numérique GSM.

13. Système de communication radio selon l'une quelconque des revendications 1 à 10, **caractérisé en ce que** ledit système radio est un système radio de téléphonie mobile DECT.

14. Station de base avec un certain nombre de canaux de transport de différents types **caractérisée en ce que** ladite station de base forme une partie d'un système de communication radio selon l'une quelconque des revendications 11 à 13, dans laquelle ladite station de base est agencée de manière à supporter ledit nombre de canaux de transport de différents types.

15. Emetteur-récepteur mobile avec un certain nombre de canaux de transport de différents types **caractérisé en ce que** ledit émetteur-récepteur mobile est adapté de manière à fonctionner à l'intérieur d'un système de communication radio selon l'une quelconque des revendications 11 à 13, dans lequel ledit émetteur-récepteur mobile est agencé afin de supporter ledit nombre de canaux de transport de différents types.

16. Procédé de commande d'une communication radio entre deux émetteurs-récepteurs dans un système de communication radio utilisant une pluralité de canaux de communication logiques comportant des moyens de commande de ressource radio destinés à affecter des ressources radio, des moyens de commande de transport destinés à configurer ladite pluralité de canaux de transport logique, **caractérisé en ce que** :
la réalisation du transport radio de données est assurée au moyen d'une pluralité d'unités fonctionnelles, chacune d'elles pouvant fonctionner suivant au moins deux modes différents, chaque mode étant défini par des spécifications fonctionnelles ; et
la sélection, pour chaque unité fonctionnelle, d'un mode de fonctionnement, est assurée au moyen d'une procédure d'établissement de liaison avec accusé de réception conduite entre lesdits deux émetteurs-récepteurs.

17. Procédé selon la revendication 16, **caractérisé en ce que** lesdites unités fonctionnelles comportent le multiplexage, le codage et/ou l'imbrication, la modulation à accès multiple et la transmission radio.

18. Procédé selon la revendication 16 ou 17, **caractérisé en ce que** lesdites unités fonctionnelles présentent les interfaces bien définies l'une par rapport à l'autre.

19. Procédé selon la revendication 18, **caractérisé en ce que** chaque spécification fonctionnelle définit quatre interfaces, à savoir :
de transport d'entrée, définissant un format de données pour des données à transmettre à une entrée vers une unité fonctionnelle ;
de transport de sortie, définissant un format de données pour des données à transmettre à partir d'une sortie d'une unité fonctionnelle ;
de commande d'entrée, définissant un format pour la signalisation de commande requise par une unité fonctionnelle ; et
de commande de sortie, définissant un format pour la signalisation produite par une unité fonctionnelle.

20. Procédé selon l'une quelconque des revendications 16 à 19, **caractérisé par** :
la transmission de paramètres entre lesdits deux émetteurs-récepteurs ; et
la commande de fonctionnement desdites unités fonctionnelles en fonction de la valeur desdits paramètres.

21. Procédé selon la revendication 20, **caractérisé en ce que** l'un desdits paramètres est une mesure de qualité de réception au niveau d'un émetteur-récepteur en réception.

22. Procédé selon l'une ou l'autre des revendications 20, ou 21, **caractérisé en ce que** chaque unité fonctionnelle est associée à une liste de spécification d'unité fonctionnelle définissant les spécifications fonctionnelles pour les différents modes de fonctionnement que cette unité fonctionnelle peut mettre en oeuvre.

23. Procédé selon la revendication 22, **caractérisé par** la sélection, lors de l'établissement d'une liaison de communication radio, d'une spécification fonctionnelle, ensemble avec un jeu de paramètres initiaux, pour chaque unité fonctionnelle.

24. Procédé selon l'une quelconque des revendications 16 à 23, **caractérisé par** :
la transmission de données de commande entre deux émetteurs-récepteurs par l'intermédiaire d'un canal de commande physique distinct des canaux de communication logiques utilisés pour la transmission de données d'abonné ; et
la synchronisation dudit canal de commande physique avec lesdits canaux de communications logiques.

25. Procédé selon la revendication 24, **caractérisé en ce que** les canaux de communication logiques appartiennent à l'un des trois groupes de canaux de transport distincts, à savoir :
un groupe minimum comprenant des canaux de transport supportés par l'ensemble des émetteurs-récepteurs dans ledit système de communications radio ;
un groupe standardisé comprenant des canaux de transport dont les spécifications sont intégrées dans certains desdits émetteurs-récepteurs ; et
un groupe ouvert comprenant des canaux de transport spécifiés au cours du fonctionnement de système.

26. Procédé selon la revendication 25, **caractérisé par** un émetteur-récepteur qui, en tant que partie d'une procédure d'établissement d'une liaison de communication, télécharge des modules logiciels requis afin de supporter un canal de transport appartenant audit groupe de canaux de transport ouvert.

27. Procédé selon l'une quelconque des revendications 16 à 26, **caractérisé en ce que** ledit système de communication radio est un système de téléphonie radio mobile cellulaire numérique.

28. Procédé selon la revendication 27, **caractérisé en ce que** ledit système radio est un système de téléphonie radio mobile cellulaire numérique GSM.

29. Procédé selon l'une quelconque des revendications 16 à 26, **caractérisé en ce que** ledit système radio est un système de téléphonie radio mobile DECT.
